# FASCICULE DE BREVET EUROPEEN

(11) **EP 2 867 034 B1**
(45) Date de publication et mention de la délivrance du brevet: **10.04.2019**
(21) Numéro de dépôt: 13734980.9
(22) Date de dépôt: 26.06.2013
(51) Int. Cl.: B60C 9/07, B60C 15/00, B60C 9/18

(54) **ARMATURE DE CARCASSE DE PNEUMATIQUE POUR VEHICULE A DEUX ROUES**
KARKASSLAGE FÜR ZWEIRAD-LUFTREIFEN
CARCASS LAYER FOR A PNEUMATIC TIRE OF A TWO-WHEELED VEHICLE

(30) Priorité: 28.06.2012 FR 1256154
(43) Date de publication de la demande: 06.05.2015
(73) Titulaire: Compagnie Générale des Etablissements Michelin, 63000 Clermont-Ferrand (FR)
(72) Inventeur: LAURENT, Christophe, F-63040 Clermont-Ferrand Cedex 9 (FR); FORMAGNE, Pierre-Yves, F-63040 Clermont-Ferrand Cedex 9 (FR); BOUCHET, Romain, F-63040 Clermont-Ferrand Cedex 9 (FR)
(74) Mandataire: Millanvois, Patrick Jacques Jean
(86) Numéro de dépôt international: PCT/EP2013/063360
(87) Numéro de publication internationale: WO 2014/001379

(56) Documents cités:
- EP-A1- 1 623 819
- EP-A2- 1 052 117
- DE-A1- 2 164 366
- JP-A- S56 135 304
- US-A- 4 706 725

## Description

L'invention concerne un pneumatique radial destiné à équiper un véhicule motorisé à deux roues, tel qu'une motocyclette ou moto.

Bien que non limitée à une telle application, l'invention sera décrite plus particulièrement en référence à un pneumatique radial destiné à être monté à l'arrière d'une moto.

Dans ce qui suit, et par convention, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique. Les angles, par rapport à la direction circonférentielle, mentionnés dans ce qui suit, ne sont pas orientés et sont indiqués en valeur absolue.

Un pneumatique comprend une bande de roulement, destinée à venir en contact avec le sol par l'intermédiaire de la surface de roulement, et reliée par l'intermédiaire de deux flancs à deux bourrelets, assurant la liaison mécanique entre le pneumatique et la jante sur laquelle il est monté.

Un pneumatique radial comprend également une armature de renforcement, comprenant une armature de sommet, radialement intérieure à la bande de roulement, et une armature de carcasse, le plus souvent radialement intérieure à l'armature de sommet.

L'armature de sommet d'un pneumatique radial pour moto comprend généralement au moins une couche de sommet constituée de renforts enrobés dans un matériau polymérique de type élastomère. Les renforts sont le plus souvent constitués d'un matériau textile, tel que l'aramide, mais peuvent être également métalliques. Différentes architectures d'armature de sommet ont été proposées par l'homme du métier, selon que le pneumatique est destiné à une monte à l'avant ou à une monte à l'arrière de la moto. Dans le cas d'une monte à l'avant, l'armature de sommet comprend le plus souvent au moins deux couches de sommet de travail, comprenant des renforts sensiblement parallèles entre eux dans chaque couche, et croisés d'une couche à la suivante, en formant, avec la direction circonférentielle, des angles généralement compris entre 15° et 35°. Les couches de sommet de travail peuvent être associées à au moins une couche de sommet circonférentielle, comprenant des renforts circonférentiels, c'est-à-dire formant, avec la direction circonférentielle, un angle sensiblement nul, au plus égal à 5°. Cette couche de sommet circonférentielle est généralement obtenue par enroulement hélicoïdal d'une bandelette d'au moins un élément de renforcement enrobé d'élastomère. Dans le cas d'une monte à l'arrière, l'armature de sommet est constituée le plus souvent d'une couche de sommet circonférentielle.

L'armature de carcasse d'un pneumatique radial pour moto comprend généralement au moins une couche de carcasse constituée de renforts le plus souvent en matériau textile enrobés dans un matériau polymérique de type élastomère. Une couche de carcasse peut être retournée ou non retournée.

Une couche de carcasse est dite retournée, lorsqu'elle comprend une partie principale, reliant les deux bourrelets entre eux et s'enroule, dans chaque bourrelet, de l'intérieur vers l'extérieur du pneumatique autour d'une tringle, pour former un retournement ayant une extrémité libre. La tringle est un élément de renforcement circonférentiel, le plus souvent métallique et enrobé dans un matériau généralement élastomérique ou textile. Dans le cas d'une couche de carcasse retournée, le retournement, dans chaque bourrelet, permet l'ancrage de la couche de carcasse retournée à la tringle. La portion de tringle en contact avec la couche de carcasse retournée contribue, en particulier au gonflage, à la reprise par couplage des efforts de tension dans la couche de carcasse retournée. Cette contribution à la reprise d'efforts de tension dépend de la rigidité de torsion de la tringle et de la géométrie du retournement. Dans le cas d'une forte rigidité de torsion de la tringle, les efforts de tension au gonflage sont essentiellement repris par la tringle, avec une contribution secondaire du retournement. Dans le cas d'une plus faible rigidité de torsion de la tringle, les efforts de tension sont repris à la fois par couplage avec la tringle et par cisaillement entre le retournement et les matériaux qui lui sont adjacents, ce qui nécessite un retournement suffisamment long, c'est-à-dire dont l'extrémité est suffisamment radialement éloignée du point le plus radialement intérieur de la tringle. Un retournement est dit long lorsque la distance radiale entre son extrémité et le point le plus radialement intérieur de la tringle est au moins égale à 0.3 fois la hauteur de section théorique du pneumatique telle que définie par les normes de la European Tyre and Rim Technical Organisation ou ETRTO.

Une couche de carcasse est non retournée, lorsqu'elle est constituée uniquement d'une partie principale, reliant les deux bourrelets entre eux, sans s'enrouler autour d'une tringle. Dans le cas d'une couche de carcasse non retournée, chacune des deux portions d'extrémités de ladite couche de carcasse non retournée peut être couplée soit avec le retournement d'au moins une couche de carcasse retournée, soit avec la partie principale d'au moins une couche de carcasse retournée. Par couplage, on entend une zone de recouvrement entre la couche de carcasse non retournée et une couche de carcasse retournée, permettant une reprise des efforts de tension par cisaillement.

Les renforts de la partie principale d'une couche de carcasse retournée ou non retournée sont sensiblement parallèles entre eux et forment, avec la direction circonférentielle, un angle compris entre 65° et 90°.

Une première architecture connue de pneumatique radial pour monte à l'arrière d'une moto comprend une armature de carcasse, constituée d'une couche de carcasse retournée et d'une couche de carcasse non retournée, radialement intérieure à une armature de sommet, constituée d'une couche de sommet circonférentielle. La couche de carcasse non retournée est axialement extérieure à la partie principale de la couche de carcasse retournée mais axialement intérieure au retournement de la couche de carcasse retournée. L'extrémité de retournement de la carcasse retournée est radialement intérieure à l'extrémité de la couche de sommet circonférentielle, ce qui implique qu'il n'y a pas de recouvrement entre le retournement de la couche de carcasse retournée et la couche de sommet circonférentielle. Les renforts respectifs de la couche de carcasse retournée et de la couche de carcasse non retournée forment, avec la direction circonférentielle, des angles sensiblement égaux en valeur absolue, de signe opposé et compris entre 65° et 85°. Une telle architecture, du fait de l'effet de triangulation résultant du croisement des renforts d'une couche de carcasse à l'autre, en particulier dans les flancs, garantit une stabilité satisfaisante de la moto dans une trajectoire en courbe. L'angle de carrossage du pneumatique arrière, entre le plan équatorial du pneumatique et le plan perpendiculaire au sol et tangent à la trajectoire, est usuellement au moins égal à 30° dans une trajectoire courbe.

Une deuxième architecture connue de pneumatique radial pour monte à l'arrière d'une moto comprend une armature de carcasse, constituée d'une unique couche de carcasse retournée, radialement intérieure à une armature de sommet, constituée d'une couche de sommet circonférentielle. L'extrémité de retournement de la carcasse retournée est radialement intérieure à l'extrémité de la couche de sommet circonférentielle, ce qui implique qu'il n'y a pas de recouvrement entre le retournement de la couche de carcasse retournée et la couche de sommet circonférentielle. Les renforts de la couche de carcasse retournée forment, avec la direction circonférentielle, un angle proche de 90°, compris en pratique entre 80° et 90°. Une telle architecture, du fait du couplage entre la couche de carcasse radiale et la couche de sommet circonférentielle, dans la zone de sommet du pneumatique, garantit une stabilité satisfaisante de la moto dans une trajectoire en ligne droite. Dans une trajectoire en ligne droite, une moto se déplace usuellement à haute vitesse, au moins égale à 150 km/h.

Les inventeurs se sont donnés pour objectif de concevoir une armature de carcasse de pneumatique radial pour une monte à l'arrière d'une moto, permettant de garantir une stabilité satisfaisante de la moto aussi bien dans une trajectoire en ligne droite à haute vitesse que dans une trajectoire en courbe à fort angle de carrossage.

Ce but a été atteint, selon l'invention, par un pneumatique radial destiné à équiper un véhicule motorisé à deux roues de type motocyclette comprenant :
- une bande de roulement, reliée par deux flancs à deux bourrelets,
- une armature de sommet, radialement intérieure à la bande de roulement, comprenant au moins une couche de sommet,
- une armature de carcasse, radialement intérieure à l'armature de sommet, comprenant au moins une couche de carcasse retournée,
- la couche de carcasse retournée comprenant des renforts parallèles entre eux et s'enroulant, dans chaque bourrelet, de l'intérieur vers l'extérieur du pneumatique autour d'une tringle, pour former un retournement comprenant une extrémité libre,
- la couche de carcasse retournée comprenant une portion sommitale et une portion latérale,
- la portion sommitale s'étendant axialement entre une première et une deuxième extrémité, symétriques par rapport au plan équatorial du pneumatique,
- la portion latérale s'étendant radialement vers l'intérieur, à partir d'une première extrémité radialement la plus extérieure, radialement intérieure à l'extrémité libre du retournement, jusqu'à une deuxième extrémité radialement la plus intérieure, radialement intérieure au point le plus radialement intérieur de la tringle,
les renforts de la portion sommitale formant, avec la direction circonférentielle, un angle sensiblement constant au moins égal à 65°,
les renforts de la portion latérale formant, avec la direction circonférentielle, un angle croissant, depuis la première extrémité radialement la plus extérieure jusqu'à la deuxième extrémité radialement la plus intérieure, à partir d'un angle inférieur d'au moins 5° à l'angle sensiblement constant, formé par les renforts de la portion sommitale,
et les renforts du retournement formant, avec la direction circonférentielle , un angle égal en valeur absolue et de signe opposé à l'angle formé par les renforts de la portion latérale.

La couche de carcasse retournée comprend une portion sommitale, reliée, de part et d'autre du plan équatorial du pneumatique, dans chaque flanc, à une portion latérale, par l'intermédiaire d'une portion de transition, la portion latérale se prolongeant, dans chaque bourrelet, par un retournement.

La portion sommitale s'étend axialement entre une première et une deuxième extrémité, symétriques par rapport au plan équatorial du pneumatique. Le plan équatorial du pneumatique est le plan passant par le milieu de la surface de roulement et perpendiculaire à l'axe de rotation du pneumatique. En d'autres termes, la portion sommitale est centrée sur le plan équatorial du pneumatique. La portion sommitale est disposée radialement à l'intérieur de l'armature de sommet et ses extrémités sont axialement intérieures aux extrémités de la surface de roulement, c'est-à-dire que la largeur axiale de la portion sommitale est inférieure à la largeur axiale de la bande de roulement.

Selon l'invention, les renforts de la portion sommitale forment, avec la direction circonférentielle, un angle sensiblement constant au moins égal à 65°, c'est-à-dire compris entre 65° et 90°, en valeur absolue.

Cette angulation des renforts de la portion sommitale, dite sensiblement radiale, entraine une faible rigidité de dérive du pneumatique. La rigidité de dérive est la force latérale générée par le pneumatique ou poussée de dérive, lorsqu'on lui applique un angle de dérive de 1°, l'angle de dérive étant l'angle formé par la droite, intersection du plan équatorial du pneumatique avec sol, et la droite tangente à la trajectoire. Cette angulation sensiblement radiale contribue ainsi à obtenir un sommet souple générant une faible poussée de dérive, ce qui contribue à garantir une bonne stabilité de la moto dans une trajectoire en ligne droite.

La portion latérale s'étend radialement vers l'intérieur, à partir d'une première extrémité radialement la plus extérieure, radialement intérieure à l'extrémité libre du retournement, jusqu'à une deuxième extrémité radialement la plus intérieure, radialement intérieure au point le plus radialement intérieur de la tringle. Son extrémité radialement la plus extérieure n'est pas reliée directement à une extrémité de la portion sommitale, mais est reliée à une portion de transition entre ladite portion latérale et la portion sommitale. Son extrémité radialement la plus intérieure est positionnée en regard du point radialement le plus intérieur de la tringle et est reliée au retournement. Cette portion latérale est positionnée axialement à l'intérieur du retournement.

Selon l'invention, les renforts de la portion latérale forment, avec la direction circonférentielle, un angle croissant, depuis la première extrémité radialement la plus extérieure jusqu'à la deuxième extrémité radialement la plus intérieure, à partir d'un angle inférieur d'au moins 5° à l'angle sensiblement constant, formé par les renforts de la portion sommitale. Cette variation d'angle est continue.

La portion de transition, intermédiaire entre la portion sommitale et la portion latérale, dans chaque flanc, comprend des renforts formant, avec la direction circonférentielle, un angle décroissant continûment depuis une première extrémité de ladite portion de transition, reliée à la portion sommitale, jusqu'à une deuxième extrémité de ladite portion de transition, reliée à la portion latérale.

Les renforts du retournement forment, avec la direction circonférentielle, un angle égal en valeur absolue et de signe opposé à l'angle formé par les renforts de la portion latérale. La portion latérale est axialement intérieure au retournement et en vis-à-vis du retournement. L'angle, formé, avec la direction circonférentielle, par les renforts du retournement, décroît, en valeur absolue, de façon continue, depuis l'extrémité radialement intérieure du retournement, en regard du point le plus radialement intérieur de la tringle, jusqu'à l'extrémité libre radialement extérieure du retournement. Par conséquent, l'armature de carcasse dans cette zone latérale est au moins constituée par la portion latérale et par le retournement en vis-à-vis, dont les renforts respectifs sont croisés, par rapport au plan méridien contenant l'axe de rotation du pneumatique, selon des angles égaux en valeur absolue et de signes contraires.

Le croisement des renforts respectifs de la portion latérale et du retournement entraîne une forte rigidité de dérive du pneumatique, lorsque le pneumatique, dans une trajectoire en courbe, a un angle de carrossage élevé, au moins égal à 30°. L'angle de carrossage est l'angle formé par le plan équatorial du pneumatique avec le plan perpendiculaire au sol et tangent à la trajectoire. A fort carrossage, la portion d'armature de carcasse constituée par la portion latérale et le retournement est à l'aplomb de la surface de contact du pneumatique avec le sol. Par conséquent, la portion de pneumatique en contact avec le sol a une rigidité relativement élevée. Le pneumatique génère alors une forte poussée, ce qui garantit une bonne stabilité de la moto dans une trajectoire en courbe.

Ainsi l'existence de deux portions de couche de carcasse, respectivement sensiblement radiale au sommet et croisée avec le retournement au flanc, permet de garantir une bonne stabilité de la moto, respectivement en ligne droite, à angle de carrossage nul, et en courbe, à angle de carrossage élevé au moins égal à 30°.

Avantageusement l'angle sensiblement constant, formé, avec la direction circonférentielle, par les renforts de la portion sommitale est au moins égal à 80°. Un angle au moins égal à 80°, donc proche de 90°, confère une stabilité de la moto optimale en ligne droite.

Encore avantageusement, la portion sommitale a une largeur axiale au moins égale à 0.3 fois et au plus égale à 0.9 fois la largeur de la bande de roulement. Cet intervalle de valeurs permet d'avoir une portion sommitale suffisamment mais pas trop large, vis-à-vis de la surface de roulement, de telle sorte que la portion d'armature de carcasse à l'aplomb de la surface de contact au sol, en ligne droite et à carrossage nul, soit radiale.

Egalement avantageusement, l'angle formé, avec la direction circonférentielle, par les renforts de la portion latérale croît à partir d'un angle minimal, compris entre 45° et 80°, jusqu'à un angle maximal, compris entre 55° et 85°. Le choix de la variation d'angle des renforts de la portion latérale permet d'ajuster la rigidité de la portion d'armature de carcasse à l'aplomb de la surface de contact au sol, en courbe et à fort carrossage, au moins égal à 30°, de façon à obtenir une stabilité de la moto optimale en courbe. En outre, la variation d'angle des renforts de la portion latérale dépend de l'angle sensiblement constant, choisi pour les renforts de la portion sommitale.

La portion latérale a avantageusement une hauteur radiale au moins égale à 0.5 fois et au plus égale à 0.9 fois la hauteur théorique de la section méridienne du pneumatique. Cette hauteur radiale conditionne la largeur axiale de la portion d'armature de carcasse à l'aplomb de la surface de contact au sol, en courbe et à fort carrossage, au moins égal à 30°. Cette caractéristique est un paramètre d'ajustement de la rigidité de dérive pour un roulage en courbe à fort carrossage.

Selon un mode de réalisation particulier, l'armature de carcasse comprend en outre une couche de carcasse non retournée, dont les renforts forment, avec la direction circonférentielle, un angle au moins égal à 65°, axialement extérieure, dans le flanc, à la couche de carcasse retournée et axialement intérieure, dans le flanc, à son retournement. Selon ce mode de réalisation particulier, les niveaux de rigidité sont augmentés par rapport à une armature de carcasse à couche de carcasse retournée unique. Dans cette configuration, la portion sommitale d'armature de carcasse comprend deux couches de carcasse sensiblement radiales, alors que la portion latérale d'armature de carcasse comprend trois couches de carcasse, constituée axialement de l'intérieur vers l'extérieur par la portion latérale de la couche de carcasse retournée, le retournement de la couche de carcasse retournée et la portion latérale de la couche de carcasse non retournée.

Les renforts d'une couche de carcasse sont en textile, de préférence en polyester ou en nylon. Ces matériaux sont couramment utilisés dans le domaine des pneumatiques pour moto, en raison d'un compromis intéressant entre leurs performances et leur coût de fabrication. L'aramide, matériau textile encore plus performant en termes de module d'élasticité et de force à rupture, peut être utilisé dans des pneumatiques à hautes performances, tels que les pneumatiques pour moto de compétition.

Selon un mode de réalisation préféré, l'armature de sommet comprend une couche de sommet circonférentielle, comprenant des renforts circonférentiels formant, avec la direction circonférentielle, un angle au plus égal à 5°. Une couche de sommet circonférentielle est couramment utilisée dans un pneumatique destiné à équiper l'arrière d'une moto, pour augmenter la rigidité circonférentielle du pneumatique et lui permettre ainsi d'atteindre des hautes vitesses sans subir de déformations trop élevées.

Selon un autre mode de réalisation, l'armature de sommet comprend deux couches de sommet de travail, comprenant des renforts circonférentiels, formant, avec la direction circonférentielle, un angle compris entre 15° et 35°, croisés d'une couche à la suivante. Une telle armature de sommet contribue à la génération de la poussée latérale du pneumatique, en particulier en courbe.

Une armature de sommet peut également combiner deux couches de sommet de travail, comprenant des renforts circonférentiels, formant, avec la direction circonférentielle, un angle compris entre 15° et 35°, croisés d'une couche à la suivante et une couche de sommet circonférentielle, comprenant des renforts circonférentiels formant, avec la direction circonférentielle, un angle au plus égal à 5°.

Les renforts d'une couche de sommet sont en textile, de préférence en polyester ou en nylon, ou en métal. Comme pour les couches d'armature de carcasse, les matériaux textiles sont couramment utilisés dans le domaine des pneumatiques pour moto, en raison d'un compromis intéressant entre leurs performances et leur coût de fabrication. Toutefois, l'utilisation de matériaux à modules d'élasticité et à force à rupture plus élevés peut s'avérer nécessaire pour le dimensionnement mécanique de l'armature de sommet. A cet effet, on peut utiliser de l'aramide ou du métal.

L'extrémité radialement extérieure du retournement de la couche de carcasse retournée peut avantageusement être en contact avec au moins une couche de sommet sur une certaine longueur de recouvrement, de telle sorte que la largeur axiale de la portion sommitale de la couche de carcasse puisse être comprise entre 0.3 fois et 0.9 fois la largeur de la bande de roulement. Cette longueur de recouvrement entre le retournement et la couche de carcasse en contact impacte la largeur de la portion de transition entre la portion latérale et la portion sommitale.

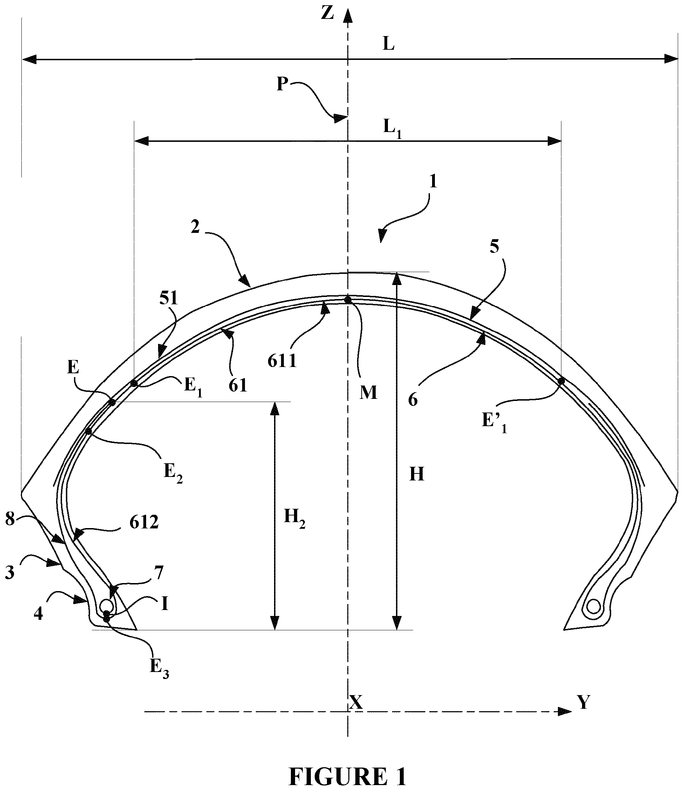

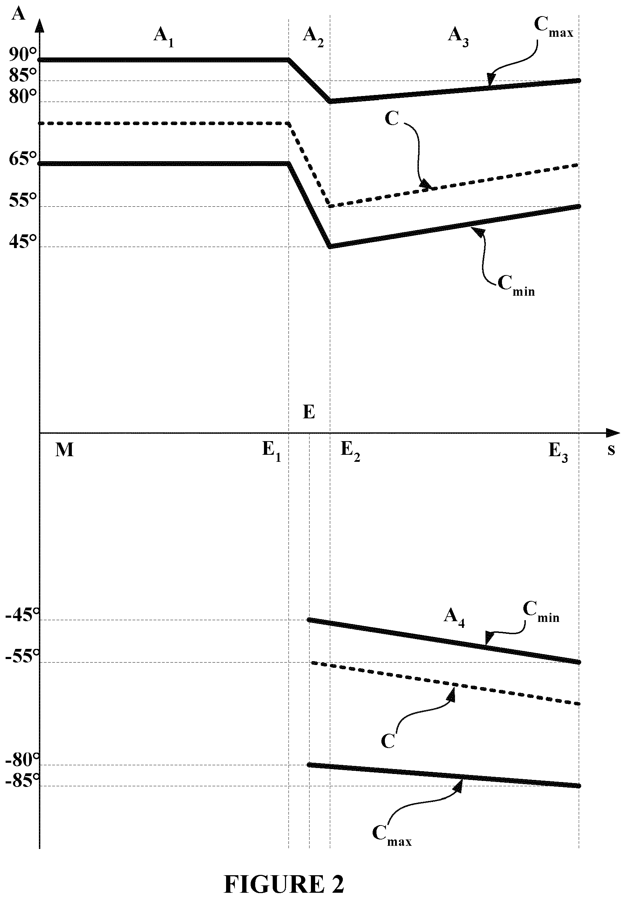

D'autres détails et caractéristiques avantageux de l'invention ressortiront ci-après de la description de l'invention en référence aux figures 1 et 2 qui représentent :
- figure 1, une coupe méridienne d'un pneumatique,
- figure 2, le graphique représentant la plage d'évolution de l'angle formé, avec la direction circonférentielle, par les renforts de la couche de carcasse retournée, selon son abscisse curviligne comprise entre le plan équatorial et l'extrémité du retournement.

Les figures 1 et 2 ne sont pas représentées à l'échelle pour en simplifier la compréhension.

La figure 1 représente un pneumatique 1 comprenant une bande de roulement 2, reliée par deux flancs 3 à deux bourrelets 4, une armature de sommet 5, radialement intérieure à la bande de roulement 2, comprenant au moins une couche de sommet 51, une armature de carcasse 6, radialement intérieure à l'armature de sommet 5, comprenant au moins une couche de carcasse retournée 61. La couche de carcasse retournée 61 comprend des renforts parallèles entre eux et s'enroule, dans chaque bourrelet 4, de l'intérieur vers l'extérieur du pneumatique autour d'une tringle 7, pour former un retournement 8.

La portion sommitale 611 de la couche de carcasse retournée 61 s'étend axialement entre une première et une deuxième extrémité E₁ et E'₁, symétriques par rapport au plan équatorial P, sur une largeur axiale L₁ comprise entre 0.3 fois et 0.9 fois la largeur axiale L de la bande de roulement, définie entre les deux extrémités axiales de la surface de roulement. La portion sommitale 611 est ainsi centrée par rapport au plan équatorial P du pneumatique, défini par les directions respectivement circonférentielle X et radiale Z.

La portion de transition entre la portion sommitale et la portion latérale est délimitée par les points E₁ et E₂.

La portion latérale 612 de la couche de carcasse retournée 61 s'étend, dans le flanc 3, radialement vers l'intérieur, à partir d'une première extrémité E₂ radialement la plus extérieure, radialement intérieure à l'extrémité libre du retournement E, jusqu'à une deuxième extrémité E₃ radialement la plus intérieure, radialement intérieure au point I le plus radialement intérieur de la tringle 7. Elle s'étend également axialement à l'intérieur du retournement 8. La hauteur radiale H₂ entre les première et deuxième extrémités E₂ et E₃ est comprise entre 0.5 fois et 0.9 fois la hauteur théorique de section H, mesurée entre le point de la surface de roulement, positionné dans le plan équatorial, et le point le plus radialement intérieur du bourrelet 4.

Le retournement 8 s'étend radialement vers l'extérieur à partir de l'extrémité E₃ radialement la plus intérieure de la portion latérale 612 jusqu'à l'extrémité libre E du retournement 8.

La figure 2 présente la plage d'évolution de l'angle A formé, avec la direction circonférentielle X, par les renforts de la couche de carcasse retournée, en fonction de l'abscisse curviligne s, comprise entre le point M du plan équatorial et l'extrémité E du retournement. La courbe Cₘₐₓ est la courbe enveloppe d'angle maximal. La courbe Cₘᵢₙ est la courbe enveloppe d'angle minimal. La courbe C est un exemple-type d'évolution de l'angle, en fonction de l'abscisse curviligne le long de la couche de carcasse retournée. Les valeurs positives de l'angle correspondent à l'évolution de l'angle respectivement le long de la portion sommitale, de la portion de transition et de la portion latérale. Les valeurs négatives de l'angle correspondent à l'évolution de l'angle le long du retournement.

La première portion de la plage d'évolution correspond à la partie de la portion sommitale 611 comprise entre les points M et E₁, pour laquelle les renforts forment, avec la direction circonférentielle X, un angle A₁ sensiblement constant compris entre 65° et 90°.

La deuxième portion de la plage d'évolution correspond à la portion de transition, comprise entre l'extrémité E₁ de la portion sommitale et l'extrémité E₂ radialement la plus extérieure de la portion latérale 612, pour laquelle les renforts forment, avec la direction circonférentielle X, un angle A₂ décroissant.

La troisième portion de la plage d'évolution correspond à la portion latérale 612 comprise entre les extrémités E₂ et E₃, respectivement radialement la plus extérieure et radialement la plus intérieure, pour laquelle les renforts forment, avec la direction circonférentielle X, un angle A₃ croissant, depuis la première extrémité E₂ radialement la plus extérieure jusqu'à la deuxième extrémité E₃ radialement la plus intérieure, à partir d'un angle inférieur d'au moins 5° à l'angle A₁ sensiblement constant, formé, avec la direction circonférentielle, par les renforts de la portion sommitale 611.

La quatrième portion de la plage d'évolution correspond au retournement 8, pour lequel les renforts forment, avec la direction circonférentielle X, un angle A₄, opposé à l'angle A₃, formé par les renforts de la portion latérale 612. Cet angle A₄, de signe contraire à celui de l'angle A₃, décroît, en valeur absolue, à partir d'un angle maximal, compris entre 55° et 85°, au niveau de l'extrémité E₃ radialement la plus intérieure de la portion latérale 612, pour atteindre un angle minimal, compris entre 45° et 80°, au niveau de l'extrémité E du retournement.

L'invention a été plus particulièrement étudiée dans la dimension 190/55 ZR 17. Dans ce cas particulier, l'angle A₁, sensiblement constant, des renforts de la portion sommitale, qui s'étend axialement sur une largeur L₁ égale à 138 mm soit 0.71 fois la largeur de la bande de roulement égale à 194 mm, est égal à 80°. L'angle A₃ des renforts de la portion latérale, qui s'étend radialement sur une hauteur H₂ égale à 0.65 fois la hauteur H théorique de section égale à 104.5 mm, croît de 62°, au niveau du point E₂, jusqu' à 70°, au niveau du point E₃.

Dans cette dimension d'étude, les renforts de la couche de carcasse retournée sont en nylon, alors que les renforts de la couche de sommet circonférentielle sont en aramide.

La rigidité de dérive de cette dimension a été comparée aux rigidités de dérive respectives d'une première dimension de référence R₁ et d'une deuxième dimension de référence R₂. La première dimension de référence R₁ comprend une armature de carcasse, constituée d'une unique couche de carcasse à 90°, et une armature de sommet, constituée d'une unique couche de sommet circonférentielle. La référence R₁ est la référence pour la stabilité ligne droite. La deuxième dimension de référence R₂ comprend une armature de carcasse, constituée de deux couches de carcasse à 65° croisées, et une armature de sommet, constituée d'une unique couche de sommet circonférentielle. La référence R₂ est la référence pour la stabilité en courbe.

Les résultats obtenus sont présentés dans le tableau 1 ci-dessous :

**Tableau 1**

| | Référence R₁ | Référence R₂ | Invention |
|---|---|---|---|
| Rigidité de dérive à angle de carrossage nul | 100 | 110 | 100 |
| Rigidité de dérive à angle de carrossage égal à 30° | 100 | 120 | 120 |

La dimension d'étude présente des niveaux de rigidités de dérive au moins équivalents à la référence la plus performante, selon que l'on est en ligne droite à carrossage nul ou en courbe à fort carrossage. Elle présente une rigidité de dérive plutôt faible en ligne droite et plutôt élevée en courbe.

L'invention ne doit pas être comprise comme étant limitée à la description des exemples ci-dessus et s'étend notamment à des pneumatiques pouvant comporter des armatures de carcasse dans lesquelles aucune couche de carcasse n'est retournée. La portion latérale de carcasse non retournée est alors axialement intérieure non pas à un retournement mais à une portion de couche de carcasse indépendante ancrée dans le bourrelet.

## Revendications

1. Pneumatique radial(1) destiné à équiper un véhicule motorisé à deux roues de type motocyclette comprenant :
- une bande de roulement (2), reliée par deux flancs (3) à deux bourrelets (4),
- une armature de sommet (5), radialement intérieure à la bande de roulement (2), comprenant au moins une couche de sommet (51),
- une armature de carcasse (6), radialement intérieure à l'armature de sommet (5), comprenant au moins une couche de carcasse retournée (61),
- la couche de carcasse retournée (61) comprenant des renforts parallèles entre eux et s'enroulant, dans chaque bourrelet (4), de l'intérieur vers l'extérieur du pneumatique autour d'une tringle (7), pour former un retournement (8) comprenant une extrémité libre (E),
- la couche de carcasse retournée (61) comprenant une portion sommitale (611) et une portion latérale (612),
- la portion sommitale (611) s'étendant axialement entre une première et une deuxième extrémité (E₁, E'₁), symétriques par rapport au plan équatorial (P) du pneumatique,
- la portion latérale (612) s'étendant radialement vers l'intérieur, à partir d'une première extrémité (E₂) radialement la plus extérieure, radialement intérieure à l'extrémité libre (E) du retournement (8), jusqu'à une deuxième extrémité (E₃) radialement la plus intérieure, radialement intérieure au point (I) le plus radialement intérieur de la tringle (7),
**caractérisé en ce que** les renforts de la portion sommitale (611) forment, avec la direction circonférentielle (X), un angle (A₁) sensiblement constant au moins égal à 65°, **en ce que** les renforts de la portion latérale (612) forment, avec la direction circonférentielle (X), un angle (A₃) croissant, depuis la première extrémité (E₂) radialement la plus extérieure jusqu'à la deuxième extrémité (E₃) radialement la plus intérieure, à partir d'un angle inférieur d'au moins 5° à l'angle (A₁) sensiblement constant, formé par les renforts de la portion sommitale (611), **et en ce que** les renforts du retournement (8) forment, avec la direction circonférentielle (X), un angle (A₄) égal en valeur absolue mais de signe opposé à l'angle (A₃) formé par les renforts de la portion latérale (612).

2. Pneumatique (1) selon la revendication 1, **caractérisé en ce que** l'angle (A₁) sensiblement constant, formé, avec la direction circonférentielle (X), par les renforts de la portion sommitale (611), est au moins égal à 80°.

3. Pneumatique (1) selon l'une des revendications 1 ou 2, **caractérisé en ce que** la portion sommitale (611) a une largeur axiale (L₁) au moins égale à 0.3 fois et au plus égale à 0.9 fois la largeur (L) de la bande de roulement (2).

4. Pneumatique (1) selon l'une quelconque des revendications 1 à 3, **caractérisé en ce que** l'angle (A₃), formé, avec la direction circonférentielle (X), par les renforts de la portion latérale (612), croît à partir d'un angle minimal, compris entre 45° et 80°, jusqu'à un angle maximal, compris entre 55° et 85°.

5. Pneumatique (1) selon l'une quelconque des revendications 1 à 4, **caractérisé en ce que** la portion latérale (612) a une hauteur radiale (H₂) au moins égale à 0.5 fois et au plus égale à 0.9 fois la hauteur théorique (H) de la section méridienne du pneumatique.

6. Pneumatique (1) selon l'une quelconque des revendications 1 à 5, **caractérisé en ce que** les renforts d'une couche de carcasse (61) sont en textile, de préférence en polyester ou en nylon.

7. Pneumatique (1) selon l'une quelconque des revendications 1 à 6, **caractérisé en ce que** l'armature de sommet (5) comprend une couche de sommet (51) circonférentielle, comprenant des renforts circonférentiels formant, avec la direction circonférentielle (X), un angle au plus égal à 5°.

8. Pneumatique (1) selon l'une quelconque des revendications 1 à 7, **caractérisé en ce que** l'armature de sommet (5) comprend deux couches de sommet de travail, comprenant des renforts circonférentiels, formant, avec la direction circonférentielle (X), un angle compris entre 15° et 35°, croisés d'une couche à la suivante.

9. Pneumatique (1) selon l'une quelconque des revendications 1 à 8, **caractérisé en ce que** les renforts d'une couche de sommet (51) sont en textile, de préférence en polyester ou en nylon, ou en métal.

## Patentansprüche

1. Radialreifen (1), der zur Ausrüstung eines motorisierten Zweiradfahrzeugs vom Typ eines Motorrads bestimmt ist und umfasst:
- einen Laufstreifen (2), der über zwei Seitenwände (3) mit zwei Wülsten (4) verbunden ist,
- eine Scheitelbewehrung (5), die radial innerhalb des Laufstreifens (2) angeordnet ist und wenigstens eine Scheitellage (51) umfasst,
- eine Karkassenbewehrung (6), die radial innerhalb der Scheitelbewehrung (5) angeordnet ist und wenigstens eine umgeschlagene Karkassenlage (61) umfasst,
- wobei die umgeschlagene Karkassenlage (61) Festigkeitsträger umfasst, die zueinander parallel sind und in jedem Wulst (4) um einen Wulstkern (7) herum von der Innenseite zur Außenseite des Reifens geführt sind, um einen Umschlag (8) zu bilden, der ein freies Ende (E) umfasst,
- wobei die umgeschlagene Karkassenlage (61) einen Scheitelabschnitt (611) und einen seitlichen Abschnitt (612) umfasst,
- wobei sich der Scheitelabschnitt (611) axial zwischen einem ersten und einem zweiten Ende (E₁, E'₁) erstreckt, die symmetrisch bezüglich der Äquatorialebene (P) des Reifens sind,
- wobei sich der seitliche Abschnitt (612) von einem radial äußersten ersten Ende (E₂), das radial innerhalb des freien Endes (E) des Umschlags (8) angeordnet ist, bis zu einem radial innersten zweiten Ende (E₃), das radial innerhalb des radial innersten Punktes (I) des Wulstkerns (7) angeordnet ist, radial nach innen erstreckt,
**dadurch gekennzeichnet, dass** die Festigkeitsträger des Scheitelabschnitts (611) mit der Umfangsrichtung (X) einen im Wesentlichen konstanten Winkel (A₁) bilden, der mindestens 65° beträgt, dadurch, dass die Festigkeitsträger des seitlichen Abschnitts (612) mit der Umfangsrichtung (X) einen Winkel (A₃) bilden, der vom radial äußersten ersten Ende (E₂) bis zum radial innersten zweiten Ende (E₃) zunimmt, ausgehend von einem Winkel, der um mindestens 5° kleiner als der im Wesentlichen konstante Winkel (A₁) ist, der von den Festigkeitsträgern des Scheitelabschnitts (611) gebildet wird, und dadurch, dass die Festigkeitsträger des Umschlags (8) mit der Umfangsrichtung (X) einen Winkel (A₄) bilden, der denselben absoluten Betrag, jedoch das entgegengesetzte Vorzeichen wie der Winkel (A₃) hat, der von den Festigkeitsträgern des seitlichen Abschnitts (612) gebildet wird.

2. Reifen (1) nach Anspruch 1, **dadurch gekennzeichnet, dass** der im Wesentlichen konstante Winkel (A₁) ist, der von den Festigkeitsträgern des Scheitelabschnitts (611) mit der Umfangsrichtung (X) gebildet wird, mindestens 80° beträgt.

3. Reifen (1) nach einem der Ansprüche 1 oder 2, **dadurch gekennzeichnet, dass** der Scheitelabschnitt (611) eine axiale Breite (L₁) aufweist, die mindestens das 0,3-fache und höchstens das 0,9-fache der Breite (L) des Laufstreifens (2) beträgt.

4. Reifen (1) nach einem der Ansprüche 1 bis 3, **dadurch gekennzeichnet, dass** der Winkel (A₃), der von den Festigkeitsträgern des seitlichen Abschnitts (612) mit der Umfangsrichtung (X) gebildet wird, von einem minimalen Winkel zwischen 45° und 80° bis zu einem maximalen Winkel zwischen 55° und 85° zunimmt.

5. Reifen (1) nach einem der Ansprüche 1 bis 4, **dadurch gekennzeichnet, dass** der seitliche Abschnitt (612) eine radiale Höhe (H₂) aufweist, die mindestens das 0,5-fache und höchstens das 0,9-fache der theoretischen Höhe (H) des Meridianschnitts des Reifens beträgt.

6. Reifen (1) nach einem der Ansprüche 1 bis 5, **dadurch gekennzeichnet, dass** die Festigkeitsträger einer Karkassenlage (61) aus Textilmaterial bestehen, vorzugsweise aus Polyester oder aus Nylon.

7. Reifen (1) nach einem der Ansprüche 1 bis 6, **dadurch gekennzeichnet, dass** die Scheitelbewehrung (5) eine entlang das Umfangs angeordnete Scheitellage (51) umfasst, die Umfangsfestigkeitsträger umfasst, welche mit der Umfangsrichtung (X) einen Winkel von höchstens 5° bilden.

8. Reifen (1) nach einem der Ansprüche 1 bis 7, **dadurch gekennzeichnet, dass** die Scheitelbewehrung (5) zwei Arbeits-Scheitellagen umfasst, die Umfangsfestigkeitsträger umfassen, welche mit der Umfangsrichtung (X) einen Winkel zwischen 15° und 35° bilden und sich von einer Lage zur nächsten überkreuzen.

9. Reifen (1) nach einem der Ansprüche 1 bis 8, **dadurch gekennzeichnet, dass** die Festigkeitsträger einer Scheitellage (51) aus Textilmaterial, vorzugsweise aus Polyester oder aus Nylon, oder aus Metall bestehen.

## Claims

1. Radial tyre (1) for the purpose of equipping a motorized two-wheeled vehicle of the motorbike type, comprising:
- a tread (2) connected by two sidewalls (3) to two beads (4),
- a crown reinforcement (5), radially on the inside of the tread (2), comprising at least one crown layer (51),
- a carcass reinforcement (6), radially on the inside of the crown reinforcement (5), comprising at least one turned-up carcass layer (61),
- the turned-up carcass layer (61) comprising mutually parallel reinforcers turned up, within each bead (4), from the inside towards the outside of the tyre around a bead wire (7), to form a turn-up (8) comprising a free end (E),
- the turned-up carcass layer (61) comprising a crown portion (611) and a lateral portion (612),
- the crown portion (611) extending axially between a first and a second end (E₁, E'₁) which is symmetric about the equatorial plane (P) of the tyre,
- the lateral portion (612) extending radially inwards, from a radially outermost first end (E₂), radially on the inside of the free end (E) of the turn-up (8), as far as a radially innermost second end (E3), radially on the inside of the radially innermost point (I) of the bead wire (7),
**characterized in that** the reinforcers of the crown portion (611) form, with the circumferential direction (X), a substantially constant angle (A₁) at least equal to 65°, **in that** the reinforcers of the lateral portion (612) form, with the circumferential direction (X), an angle (A₃) that increases, from the radially outermost first end (E₂) to the radially innermost second end (E₃) from an angle at least 5° smaller than the substantially constant angle (A₁) formed by the reinforcers of the crown portion (611), **and in that** the reinforcers of the turn-up (8) form, with the circumferential direction (X), an angle (A₄) which is equal in terms of absolute value to, but of opposite sign from, the angle (A₃) formed by the reinforcers of the lateral portion (612).

2. Tyre (1) according to Claim 1, **characterized in that** the substantially constant angle (A₁) formed, with the circumferential direction (X), by the reinforcers of the crown portion (611), is at least equal to 80°.

3. Tyre (1) according to one of Claims 1 and 2, **characterized in that** the crown portion (611) has an axial width (L₁) at least equal to 0.3 times and at most equal to 0.9 times the width (L) of the tread (2).

4. Tyre (1) according to any one of Claims 1 to 3, **characterized in that** the angle (A₃) formed, with the circumferential direction (X), by the reinforcers of the lateral portion (612), increases from a minimum angle of between 45° and 80°, to a maximum angle of between 55° and 85°.

5. Tyre (1) according to any one of Claims 1 to 4, **characterized in that** the lateral portion (612) has a radial height (H₂) at least equal to 0.5 times and at most equal to 0.9 times the design section height (H) of the meridian section of the tyre.

6. Tyre (1) according to any one of Claims 1 to 5, **characterized in that** the reinforcers of a carcass layer (61) are made of textile, preferably of polyester or of nylon.

7. Tyre (1) according to any one of Claims 1 to 6, **characterized in that** the crown reinforcement (5) comprises a circumferential crown layer (51) comprising circumferential reinforcers forming, with the circumferential direction (X), an angle at most equal to 5°.

8. Tyre (1) according to any one of Claims 1 to 7, **characterized in that** the crown reinforcement (5) comprises two working crown layers, comprising circumferential reinforcers forming, with the circumferential direction (X), an angle of between 15° and 35° and which are crossed from one layer to the next.

9. Tyre (1) according to any one of Claims 1 to 8, **characterized in that** the reinforcers of a crown layer (51) are made of textile, preferably of polyester or of nylon, or are made of metal.
